# EUROPEAN PATENT APPLICATION

(11) **EP 3 546 737 A1**
(43) Date of publication of application: **02.10.2019**
(21) Application number: 19166650.2
(22) Date of filing: 01.04.2019
(51) Int. Cl.: F02K 3/06, F02C 7/36, F02C 3/107

(54) **GAS TURBINE ENGINE COMPRESSOR ARRANGEMENT**

(30) Priority: 30.03.2018 US 201815941240
(71) Applicant: United Technologies Corporation, Farmington, CT 06032 (US)
(72) Inventor: HASEL, Karl L., Manchester, CT Connecticut 06040 (US); STAUBACH, Joseph B., Colchester, CT Connecticut 06415 (US); MERRY, Brian D., Andover, CT Connecticut 06232 (US); SUCIU, Gabriel L., Glastonbury, CT Connecticut 06033 (US); DYE, Christopher M., San Diego, CA California 92117 (US)
(74) Representative: Dehns

(57) **Abstract**

A gas turbine engine (10) includes, among other things, a fan (14; 714), a core engine, a bypass passage (58), and a bypass ratio defined as the volume of air passing into the bypass passage (58) compared to the volume of air passing into the core engine, the bypass ratio being greater than or equal to 10. A gear arrangement (62; 762) drives the fan (14; 714). A compressor section (19) includes both a low pressure compressor (18; 718) and a high pressure compressor (22). A turbine section (21) drives the gear arrangement (62; 762). An overall pressure ratio is provided by the combination of a pressure ratio across the low pressure compressor (18; 718) and a pressure ratio across the high pressure compressor (22), and greater than 50, measured at sea level and at a static, full-rated takeoff power. The pressure ratio across the high pressure compressor (22) is greater than 7.

## Description

### BACKGROUND

The present invention relates generally to a gas turbine engine.

Gas turbine engines are known, and typically include a compressor for compressing air and delivering it downstream into a combustion section. A fan may move air to the compressor. The compressed air is mixed with fuel and combusted in the combustion section. The products of this combustion are then delivered downstream over turbine rotors, which are driven to rotate and provide power to the engine.

The compressor includes rotors moving within a compressor case to compress air. Maintaining close tolerances between the rotors and the interior of the compressor case facilitates air compression.

Gas turbine engines may include an inlet case for guiding air into a compressor case. The inlet case is mounted adjacent the fan section. Movement of the fan section, such as during in-flight maneuvers, may move the inlet case. Some prior gas turbine engine designs support a front portion of the compressor with the inlet case while an intermediate case structure supports a rear portion of the compressor. In such an arrangement, movement of the fan section may cause at least the front portion of the compressor to move relative to other portions of the compressor.

Disadvantageously, relative movement between portions of the compressor may vary rotor tip and other clearances within the compressor, which can decrease the compression efficiency. Further, supporting the compressor with the inlet case may complicate access to some plumbing connections near the inlet case.

It would be desirable to reduce relative movement between portions of the compressor and to simplify accessing plumbing connection in a gas turbine engine.

Traditionally, a fan and low pressure compressor have been driven in one of two manners. First, one type of known gas turbine engine utilizes three turbine sections, with one driving a high pressure compressor, a second turbine rotor driving the low pressure compressor, and a third turbine rotor driving the a fan. Another typical arrangement utilizes a low pressure turbine section to drive both the low pressure compressor and the fan.

Recently it has been proposed to incorporate a gear reduction to drive the fan such that a low pressure turbine can drive both the low pressure compressor and the fan, but at different speeds.

### SUMMARY

A gas turbine engine according to an aspect of the present invention includes fan, a low fan pressure ratio of less than or equal to 1.45 measured across the fan alone, and measured at sea level and at a static, full-rated takeoff power, a two spool core engine that has a low spool having a low pressure compressor and a high spool having a high pressure compressor, a bypass passage, and a bypass ratio defined as the volume of air passing into the bypass passage compared to the volume of air passing into the core engine. The bypass ratio is greater than 10 measured at cruise power. A turbine section has a low pressure turbine with an inlet, an outlet, and a low pressure turbine pressure ratio greater than 5, measured at sea level and at a static, full-rated takeoff power. The low pressure turbine pressure ratio is a ratio of a pressure measured prior to the inlet as related to a pressure at the outlet prior to any exhaust nozzle. The low spool may include a low shaft connecting the low pressure turbine and the low pressure compressor such that the low pressure turbine and the low pressure compressor are rotatable at a common speed. A gear arrangement drives the fan. The gear arrangement defines a gear reduction ratio of greater than 2.3. The gear arrangement is driven by the low pressure turbine through the low shaft. An overall pressure ratio is provided by the combination of a pressure ratio across the low pressure compressor and a pressure ratio across the high pressure compressor and, greater than 50, measured at sea level and at a static, full-rated takeoff power. The pressure ratio across the high pressure compressor is greater than 7, measured at sea level and at a static, full-rated takeoff power. The pressure ratio across the low pressure compressor is less than 6, measured at sea level and at a static, full-rated takeoff power.

In an embodiment, the gear arrangement is intermediate a compressor rotor, such as the LPC, and the low shaft such that the fan and the compressor rotor rotate at a common speed that is less than that of the low pressure turbine.

In a further embodiment of any of the foregoing embodiments, the turbine section further includes a two stage high pressure turbine.

In a further embodiment of any of the foregoing embodiments, the low fan pressure ratio is less than 1.35, measured across the fan alone, when the engine is at measured at sea level and at a static, full-rated takeoff power.

In a further embodiment of any of the foregoing embodiments, the pressure ratio across the low pressure compressor is less than or equal to 5, measured at sea level and at a static, full-rated takeoff power, and the pressure ratio across the high pressure compressor is greater than 10, measured at sea level and at a static, full-rated takeoff power.

In a further embodiment of any of the foregoing embodiments, the low pressure compressor is a three stage compressor. The low pressure turbine is a three or four stage turbine, and the overall pressure ratio is less than 80, measured at sea level and at a static, full-rated takeoff power.

A further embodiment of any of the foregoing embodiments includes a plumbing connection area that provides access to compressed air from a compressed air system and oil from a lubrication system.

A further embodiment of any of the foregoing embodiments includes a thrust reverser that selectively communicates air from the bypass passage, and wherein the fan is a fixed pitch fan and has a low corrected fan tip speed of less than 1150 feet / second (350.5 m/s).

In a further embodiment of any of the foregoing embodiments, the pressure ratio across the low pressure compressor is less than or equal to 4, measured at sea level and at a static, full-rated takeoff power.

In a further embodiment of any of the foregoing embodiments, the high pressure compressor is a nine to eleven stage compressor, and the gear reduction ratio is less than or equal to 4.5.

In a further embodiment of any of the foregoing embodiments, the high pressure compressor is a ten or eleven stage compressor, and the gear reduction ratio is less than or equal to 4.

A further embodiment of any of the foregoing embodiments includes a compressed air system and a lubrication system in communication with the gear arrangement.

A further embodiment of any of the foregoing embodiments includes a plumbing connection area that provides access to at least one of compressed air from the compressed air system, or oil from the lubrication system.

In a further embodiment of any of the foregoing embodiments, the plumbing connection area provides access to both compressed air from the compressed air system and oil from the lubrication system, and the plumbing connection area is removable with the gear arrangement.

In a further embodiment of any of the foregoing embodiments,the pressure ratio across the low pressure compressor is less than or equal to 5, measured at sea level and at a static, full-rated takeoff power. The overall pressure ratio is less than 80, measured at sea level and at a static, full-rated takeoff power.

In a further embodiment of any of the foregoing embodiments, the fan has a low corrected fan tip speed of less than 1150 feet / second, and the low pressure turbine is a four stage turbine.

In a further embodiment of any of the foregoing embodiments, the low pressure compressor is a four stage compressor. The overall pressure ratio is less than 80, measured at sea level and at a static, full-rated takeoff power. The gear reduction ratio is less than 4.

In a further embodiment of any of the foregoing embodiments, the pressure ratio across the low pressure compressor is less than or equal to 5, measured at sea level and at a static, full-rated takeoff power. The overall pressure ratio is less than or equal to 80, measured at sea level and at a static, full-rated takeoff power.

In a further embodiment of any of the foregoing embodiments, the pressure ratio across the low pressure compressor is equal to or greater than 4, measured at sea level and at a static, full-rated takeoff power. The low fan pressure ratio is less than or equal to 1.3, measured across the fan alone, and measured at sea level and at a static, full-rated takeoff power. The low pressure turbine is a four stage turbine. The engine is rated to produce between 15,000 and 50,000 pounds of thrust, measured at sea level and at a static, full-rated takeoff power. The low pressure compressor and the high pressure compressor establish a pressure split ratio that is greater than 0.80.

A gas turbine engine according to another aspect of the present invention includes a fan, a low fan pressure ratio of less than or equal to 1.35 measured across the fan alone, and measured at sea level and at a static, full-rated takeoff power. A core engine has a low pressure compressor and a high pressure compressor, a bypass passage, and a bypass ratio defined as the volume of air passing into the bypass passage compared to the volume of air passing into the core engine. The bypass ratio is greater than 10 at cruise power. A gear arrangement drives the fan. The gear arrangement defines a gear reduction ratio of greater than 2.3. A turbine section drives the gear arrangement. An overall pressure ratio is provided by the combination of a pressure ratio across the low pressure compressor and a pressure ratio across the high pressure compressor, and greater than 50 and less than 80, measured at sea level and at a static, full-rated takeoff power. The pressure ratio across the high pressure compressor is greater than 10, measured at sea level and at a static, full-rated takeoff power. The pressure ratio across the low pressure compressor is less than or equal to 5, measured at sea level and at a static, full-rated takeoff power.

In a further embodiment of any of the foregoing embodiments, the turbine section includes a two stage high pressure turbine, and a three or four stage low pressure turbine.

In a further embodiment of any of the foregoing embodiments, the low pressure compressor is a three or four stage compressor. the high pressure compressor is a nine to eleven stage compressor, and the gear reduction ratio is less than 4.5.

In a further embodiment of any of the foregoing embodiments, the gear arrangement is driven by the low pressure turbine and the low pressure compressor, and the low pressure turbine is a four stage turbine.

In a further embodiment of any of the foregoing embodiments, the pressure ratio across the high pressure compressor is less than or equal to 35, measured at sea level and at a static, full-rated takeoff power.

In a further embodiment of any of the foregoing embodiments, the pressure ratio across the low pressure compressor is less than or equal to 4, measured at sea level and at a static, full-rated takeoff power.

In a further embodiment of any of the foregoing embodiments, the low pressure turbine includes an inlet, an outlet, and a low pressure turbine pressure ratio greater than 5, wherein the low pressure turbine pressure ratio is a ratio of a pressure measured prior to the inlet as related to a pressure at the outlet prior to any exhaust nozzle.

A further embodiment of any of the foregoing embodiments includes a compressed air system and a lubrication system in communication with the gear arrangement, and wherein the gear reduction ratio is less than or equal to 4.

In a further embodiment of any of the foregoing embodiments, the low pressure compressor is a three stage compressor, and the high pressure compressor is a nine stage compressor.

In a further embodiment of any of the foregoing embodiments, the low pressure compressor is a four stage compressor, and the high pressure compressor is a nine or ten stage compressor.

In a further embodiment of any of the foregoing embodiments, the high pressure compressor is a ten stage compressor, and the low pressure compressor and the high pressure compressor establish a pressure split ratio that is greater than 0.50.

A gas turbine engine according to another aspect of the present invention includes a fan, a low fan pressure ratio of less than or equal to 1.35 measured across the fan alone, and measured at sea level and at a static, full-rated takeoff power. A core engine has a low pressure compressor and a high pressure compressor, a bypass passage, and a bypass ratio defined as the volume of air passing into the bypass passage compared to the volume of air passing into the core engine. The bypass ratio is greater than 10 and is less than 22 measured at cruise power. A turbine section has a low pressure turbine with an inlet, an outlet, and a low pressure turbine pressure ratio greater than 5 and less than 20, measured at sea level and at a static, full-rated takeoff power. The low pressure turbine pressure ratio is a ratio of a pressure measured prior to the inlet as related to a pressure at the outlet prior to any exhaust nozzle. A gear arrangement drives the fan. The gear arrangement defines a gear reduction ratio of greater than 2.3 and less than 4.5, and a compressed air system and a lubrication system in communication with the gear arrangements. A compressed air system and a lubrication system is in communication with the gear arrangement. An overall pressure ratio is provided by the combination of a pressure ratio across the low pressure compressor and a pressure ratio across the high pressure compressor, and greater than 50, and less than or equal to 80, measured at sea level and at a static, full-rated takeoff power. The pressure ratio across the high pressure compressor is greater than 10, and is less than or equal to 35, measured at sea level and at a static, full-rated takeoff power. The pressure ratio across the low pressure compressor is less than or equal to 4, measured at sea level and at a static, full-rated takeoff power.

A gas turbine engine according to another aspect of the present invention includes a fan section, a low fan pressure ratio of less than 1.45 measured across a fan blade alone, a core engine, a bypass passage, and a bypass ratio defined as the volume of air passing into the bypass passage compared to the volume of air passing into the core engine. The bypass ratio is greater than 10. A gear arrangement that drives the fan section defines a gear reduction ratio of greater than 2.3:1. A compressor section includes both a low pressure compressor and a high pressure compressor. A guide vane with a forward attachment is positioned aft of a plumbing connection area. A turbine section drives the gear arrangement, and includes a low pressure turbine with an inlet, an outlet, and a low pressure turbine pressure ratio greater than 5:1. The low pressure turbine pressure ratio is a ratio of a pressure measured prior to the inlet as related to a pressure at the outlet prior to any exhaust nozzle. The turbine section further includes a two stage high pressure turbine. An overall pressure ratio is provided by the combination of a pressure ratio across the low pressure compressor and a pressure ratio across the high pressure compressor, and is greater than 50, measured at sea level and at a static, full-rated takeoff power. The pressure ratio across the high pressure compressor is greater than 7, measured at sea level and at a static, full-rated takeoff power.

In a further embodiment of any of the foregoing embodiments, the plumbing connection area provides access to at least one of compressed air from a compressed air system, or oil from a lubrication system.

In a further embodiment of any of the foregoing embodiments, the fan section has a low corrected fan tip speed of less than 1150 ft / second (350.5 m/s).

In a further embodiment of any of the foregoing embodiments, the gear arrangement is positioned between the fan section on one side and the low pressure compressor on another side.

In a further embodiment of any of the foregoing embodiments, the low fan pressure ratio is less than 1.35.

In a further embodiment of any of the foregoing embodiments, the low pressure turbine is a four stage turbine.

In a further embodiment of any of the foregoing embodiments, the low pressure compressor is a three stage compressor.

In a further embodiment of any of the foregoing embodiments, the high pressure compressor is a nine stage compressor.

In a further embodiment of any of the foregoing embodiments, the overall pressure ratio is less than or equal to 70.

In a further embodiment of any of the foregoing embodiments, the high pressure compressor is a nine stage compressor, and the low pressure compressor is a three stage compressor.

In a further embodiment of any of the foregoing embodiments, the low pressure turbine is a four stage turbine.

In a further embodiment of any of the foregoing embodiments, the low fan pressure ratio is less than 1.35.

In a further embodiment of any of the foregoing embodiments, the plumbing connection area provides access to both compressed air from a compressed air system, and oil from a lubrication system.

In a further embodiment of any of the foregoing embodiments, the gear arrangement is a planetary gear system with a sun gear, a ring gear, and a plurality of orbiting planet gears arranged circumferentially about the sun gear and intermeshing with the sun gear and the ring gear.

A gas turbine engine according to another aspect of the present invention includes a low fan pressure ratio of less than 1.45 measured across a fan blade alone, a core engine, a bypass passage, and a bypass ratio defined as the volume of air passing into the bypass passage compared to the volume of air passing into the core engine. The bypass ratio is greater than 10. A gear arrangement drives the fan section. The gear arrangement defines a gear reduction ratio of greater than 2.3:1. A compressor section includes both a low pressure compressor and a high pressure compressor. A guide vane includes a forward attachment. The forward attachment is positioned aft of a plumbing connection area. A turbine section drives the gear arrangement, and includes a low pressure turbine with an inlet, an outlet, and a low pressure turbine pressure ratio greater than 5:1. The low pressure turbine pressure ratio is a ratio of a pressure measured prior to the inlet as related to a pressure at the outlet prior to any exhaust nozzle. The turbine section further includes a two stage high pressure turbine. An overall pressure ratio is provided by the combination of a pressure ratio across the low pressure compressor and a pressure ratio across the high pressure compressor, and is greater than 50, measured at sea level and at a static, full-rated takeoff power. The pressure ratio across the high pressure compressor is greater than 7, measured at sea level and at a static, full-rated takeoff power.

In a further embodiment of any of the foregoing embodiments, the plumbing connection area provides access to at least one of compressed air from a compressed air system, or oil from a lubrication system.

In a further embodiment of any of the foregoing embodiments, the fan section and the low pressure compressor are rotatable in a common direction.

In a further embodiment of any of the foregoing embodiments, the low pressure turbine is a four stage turbine.

In a further embodiment of any of the foregoing embodiments, the fan section has a low corrected fan tip speed of less than 1150 ft / second (350.5 m/s).

In a further embodiment of any of the foregoing embodiments, the high pressure compressor is a nine stage compressor, and the low pressure compressor is a three stage compressor.

In a further embodiment of any of the foregoing embodiments, the low pressure compressor is a three stage compressor.

In a further embodiment of any of the foregoing embodiments, the low pressure turbine is a four stage turbine.

In a further embodiment of any of the foregoing embodiments, the high pressure compressor is a nine stage compressor.

In a further embodiment of any of the foregoing embodiments, the fan section has a low corrected fan tip speed of less than 1150 ft / second (350.5 m/s).

In a further embodiment of any of the foregoing embodiments, the low pressure turbine is a four stage turbine.

In a further embodiment of any of the foregoing embodiments, the low fan pressure ratio is less than 1.35, measured across a fan blade alone, when the engine is at cruise power.

In a further embodiment of any of the foregoing embodiments, the gear arrangement is positioned between the fan section on one side and the low pressure compressor on another side.

In a further embodiment of any of the foregoing embodiments, the low pressure compressor is a three stage compressor.

In a further embodiment of any of the foregoing embodiments, the plumbing connection area is removable with the gear arrangement.

In a further embodiment of any of the foregoing embodiments, the overall pressure ratio is less than or equal to 70.

A gas turbine engine, according to another aspect of the present invention includes, among other things, a fan section including a fan and a gear arrangement configured to drive the fan section. A compressor section includes both a first compressor and a second compressor. A turbine section is configured to drive the compressor section and the gear arrangement. An overall pressure ratio is provided by the combination of a pressure ratio across the first compressor and a pressure ratio across the second compressor and is greater than or equal to about 35. The pressure ratio across the first compressor is greater than or equal to about 7. A pressure ratio across the fan section is less than or equal to about 1.50. The fan is configured to deliver a portion of air into the compressor section, and a portion of air into a bypass duct.

In a further non-limiting embodiment of the foregoing gas turbine engine, the first compressor is upstream of the second compressor.

In a further non-limiting embodiment of either of the foregoing gas turbine engines, the first compressor is downstream of the second compressor.

In a further non-limiting embodiment of any of the foregoing gas turbine engines, the pressure ratio across the fan section is less than or equal to about 1.45.

In a further non-limiting embodiment of any of the foregoing gas turbine engines, the overall pressure ratio is above or equal to about 50.

In a further non-limiting embodiment of any of the foregoing gas turbine engines, the geared arrangement defines a gear reduction ratio greater than or equal to about 2.3.

In a further non-limiting embodiment of any of the foregoing gas turbine engines, a bypass ratio, which is defined as a volume of air passing to the bypass duct compared to a volume of air passing into the compressor section, is greater than or equal to about 8.

In a further non-limiting embodiment of any of the foregoing gas turbine engines, the turbine section includes a fan drive turbine configured to drive the fan section, a pressure ratio across the fan drive turbine being greater than or equal to about 5.

In a further non-limiting embodiment of any of the foregoing gas turbine engines, the fan section includes a plurality of fan blades and a fan blade tip speed of each of the fan blades is less than about 1150 ft/second (350.5 m/s).

A gas turbine engine, according to another aspect of the present invention includes, among other things, a fan section including a fan, and a gear arrangement configured to drive the fan section. A compressor section includes both a first compressor and a second compressor. A turbine section is configured to drive the compressor section and the gear arrangement. An overall pressure ratio is provided by the combination of a pressure ratio across the first compressor and a pressure ratio across the second compressor and is greater than or equal to about 35. The pressure ratio across the first compressor is less than or equal to about 8. A pressure ratio across the fan section is less than or equal to about 1.50. The fan is configured to deliver a portion of air into the compressor section, and a portion of air into a bypass duct.

In a further non-limiting embodiment of the foregoing gas turbine engine, the first compressor is upstream of the second compressor.

In a further non-limiting embodiment of either of the foregoing gas turbine engines, the first compressor is downstream of the second compressor.

In a further non-limiting embodiment of any of the foregoing gas turbine engines, the pressure ratio across the fan section is less than or equal to about 1.45.

In a further non-limiting embodiment of any of the foregoing gas turbine engines, the overall pressure ratio is above or equal to about 50.

In a further non-limiting embodiment of any of the foregoing gas turbine engines, the pressure ratio across the second compressor is greater than or equal to about 7.

In a further non-limiting embodiment of any of the foregoing gas turbine engines, the pressure ratio across the first compressor is between about 3 and about 8, and the pressure ratio across the second compressor is between about 7 and about 15.

In a further non-limiting embodiment of any of the foregoing gas turbine engines, the geared arrangement defines a gear reduction ratio greater than or equal to about 2.3.

In a further non-limiting embodiment of any of the foregoing gas turbine engines, a bypass ratio, which is defined as a volume of air passing to the bypass duct compared to a volume of air passing into the compressor section, being greater than or equal to about 8.

In a further non-limiting embodiment of any of the foregoing gas turbine engines, the turbine section includes a fan drive turbine configured to drive the fan section, a pressure ratio across the fan drive turbine being greater than or equal to about 5.

In a further non-limiting embodiment of any of the foregoing gas turbine engines, the fan section includes a plurality of fan blades and a fan blade tip speed of each of the fan blades is less than about 1150 ft/second.

A gas turbine engine, according to another aspect of the present invention includes, among other things, a fan section including a fan, and a gear arrangement configured to drive the fan section. A compressor section includes both a first compressor and a second compressor. A turbine section is configured to drive the compressor section and the gear arrangement. An overall pressure ratio is provided by the combination of a pressure ratio across the first compressor and a pressure ratio across the second compressor, the pressure ratio across the first compressor being less than about 8, and the pressure ratio across the second compressor being greater than or equal to about 7. A pressure ratio across the fan section is less than or equal to about 1.50. The fan is configured to deliver a portion of air into the compressor section, and a portion of air into a bypass duct.

In a further non-limiting embodiment of the foregoing gas turbine engine, the first compressor is upstream of the second compressor.

In a further non-limiting embodiment of the foregoing gas turbine engine, the first compressor is downstream of the second compressor.

In a further non-limiting embodiment of the foregoing gas turbine engine, the pressure ratio across the fan section is less than or equal to about 1.45.

In a further non-limiting embodiment of the foregoing gas turbine engine, the overall pressure ratio is greater than or equal to about 35.

In a further non-limiting embodiment of the foregoing gas turbine engine, the geared arrangement defines a gear reduction ratio greater than or equal to about 2.3.

In a further non-limiting embodiment of the foregoing gas turbine engine, a bypass ratio, which is defined as a volume of air passing to the bypass duct compared to a volume of air passing into the compressor section, being greater than or equal to about 8.

In a further non-limiting embodiment of the foregoing gas turbine engine, the turbine section includes a fan drive turbine configured to drive the fan section, a pressure ratio across the fan drive turbine being greater than or equal to about 5.

An arrangement for a gas turbine engine, according to another aspect of the present invention includes, among other things, a fan section having a central axis, a compressor case for housing a compressor, and an inlet case for guiding air to the compressor, the compressor case positioned axially further from the fan section than the inlet case. A support member extends between the fan section and the compressor case wherein the support member restricts movement of the compressor case relative to the inlet case. The compressor case includes a front compressor case portion and a rear compressor case portion, the rear compressor case portion being axially further from the inlet case than the front compressor case portion. The support member extends between the fan section and the front compressor case portion, and the inlet case is removable from the gas turbofan engine separately from the compressor case. The compressor case includes a first compressor section and a second compressor section. A turbine section drives at least one of the first and second compressor sections, and a gear arrangement is driven by the turbine section such that the gear arrangement drives the fan section. A plumbing connection area is positioned upstream of the support member to be utilized for maintenance and repair. The present invention extends to a method of operating a gas turbine engine according to any of the foregoing aspects or embodiments thereof. The various features and advantages of this invention will become apparent to those skilled in the art from the following detailed description of an embodiment. The drawings that accompany the detailed description can be briefly described as follows.

### BRIEF DESCRIPTION OF THE DRAWINGS

Figure 1 illustrates a schematic sectional view of an embodiment of a gas turbine engine.
Figure 2 illustrates a sectional view of a prior art compressor case mounting arrangement. Notably, some aspects are not prior art.
Figure 3 illustrates a sectional view of an example compressor case mounting arrangement of an embodiment of the current invention.
Figure 4 illustrates a close up sectional view of the intersection between an inlet case and a low pressure compressor case in the embodiment of Figure 3.
Figure 5 graphically shows a split in the compression ratios between the low pressure and high pressure compressor sections in a gas turbine engine embodiment.
Figure 6A is a partial cross-sectional view of a fan.
Figure 6B is a cross-sectional view of a fan blade along line 6B-6B of Figure 6A.
Figure 7A is a partial cross section view of a thrust reverser and a variable area nozzle in stowed positions.
Figure 7B is a partial cross section view of the thrust reverser of Figure 7A in the stowed position and the variable area nozzle of Figure 7A in a deployed position.
Figure 7C is a partial cross section view of the thrust reverser and the variable area nozzle of Figure 7A in deployed positions.
Figure 8 shows another embodiment.
Figure 9 shows yet another embodiment.
Figure 10 shows example fan pressure ratios at various operating conditions.
Figure 11 shows example bypass ratios at various operating conditions.

### DETAILED DESCRIPTION

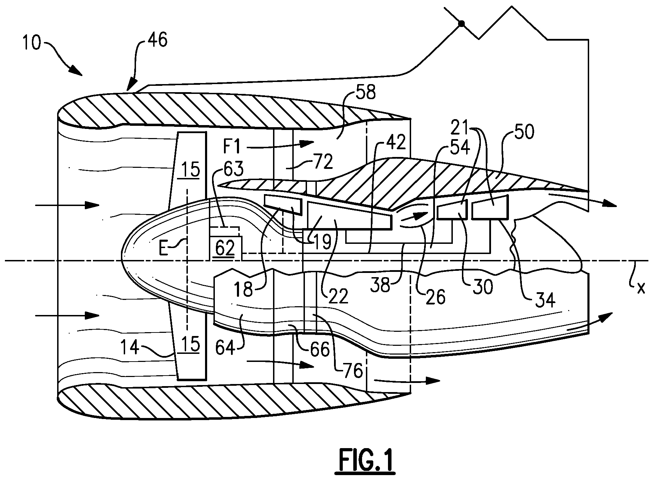

Figure 1 schematically illustrates an example gas turbine engine 10 including (in serial flow communication) a fan section 14, a compressor section 19 that includes a low pressure (or first) compressor section 18 and a high pressure (or second) compressor section 22, a combustor 26, and a turbine section 21 that includes a high pressure (or second) turbine section 30 and a low pressure (or first) turbine section 34. The gas turbine engine 10 is circumferentially disposed about an engine centerline X. During operation, air is pulled into the gas turbine engine 10 by the fan section 14, pressurized by the compressors 18, 22 mixed with fuel, and burned in the combustor 26. Hot combustion gases generated within the combustor 26 flow through high and low pressure turbines 30, 34, which extract energy from the hot combustion gases. As used herein, a "high pressure" compressor or turbine experiences a higher pressure than a corresponding "low pressure" compressor or turbine.

In a two-spool design, the high pressure turbine 30 utilizes the extracted energy from the hot combustion gases to power the high pressure compressor 22 through a high speed shaft 38, and a low pressure turbine 34 utilizes the energy extracted from the hot combustion gases to power the low pressure compressor 18 and the fan section 14 through a low speed shaft 42. The low pressure turbine 34 and the low pressure compressor 18 are connected by the low speed shaft 42 such that the low pressure turbine 34 and the low pressure compressor 18 are rotatable at a common speed. However, the invention is not limited to the two-spool gas turbine architecture described and may be used with other architectures such as a single-spool axial design, a three-spool axial design and other architectures. That is, there are various types of gas turbine engines, many of which could benefit from the examples disclosed herein, which are not limited to the design shown.

The example gas turbine engine 10 is in the form of a high bypass ratio turbine engine mounted within a nacelle or fan casing 46, which surrounds an engine casing 50 housing a core engine 54. A significant amount of air pressurized by the fan section 14 bypasses the core engine 54 for the generation of propulsion thrust. The airflow entering the fan section 14 may bypass the core engine 54 via a fan bypass duct or passage 58 extending between the fan casing 46 and the engine casing 50 for receiving and communicating a discharge airflow F1. The high bypass flow arrangement provides a significant amount of thrust for powering an aircraft.

The gas turbine engine 10 may include a geartrain 62 for controlling the speed of the rotating fan section 14. The geartrain 62 can be any known gear system, such as a planetary gear system with orbiting planet gears, a planetary system with non-orbiting planet gears or other type of gear system. The low pressure turbine 34 may drive the geartrain 62 through the low speed shaft 42. In the disclosed example, the geartrain 62 has a constant gear ratio. It should be understood, however, that the above parameters are only exemplary of a contemplated geared gas turbine engine 10. That is, aspects of the invention are applicable to traditional turbine engines as well as other engine architectures.

The engine 10 in one example is a high-bypass geared aircraft engine. In a further example, the engine 10 bypass ratio is greater than about six, with an example embodiment being greater than ten, the geared architecture 62 is an epicyclic gear train, such as a planetary gear system or other gear system, with a gear reduction ratio of greater than about 2.3 and the low pressure turbine 34 has a pressure ratio that is greater than or equal to about 5 or that is less than or equal to 20. In one example, the geared architecture 62 includes a sun gear, a ring gear, and intermediate gears arranged circumferentially about the sun gear and intermeshing with the sun gear and the ring gear. The intermediate gears are star gears grounded against rotation about the axis X. The sun gear is supported by the low speed shaft 38, and the ring gear is interconnected to the fan 14.

In one disclosed embodiment, the engine 10 bypass ratio is greater than about ten, the fan diameter is significantly larger than that of the low pressure compressor 18, and the low pressure turbine 34 has a pressure ratio that is greater than or equal to about 5:1, or is less than or equal to about 20. Low pressure turbine 34 pressure ratio is pressure measured prior to inlet of low pressure turbine 34 as related to the pressure at the outlet of the low pressure turbine 34 prior to an exhaust nozzle. The geared architecture 62 may be an epicycle gear train, such as a planetary gear system having a fixed ring gear 63 (shown in dashed lines) that is attached to a static structure of the engine 10 or another gear system such as a star gear system having a rotatable ring gear 63 that is rotatable about the axis X, with a gear reduction ratio of greater than about 2.3:1, and more specifically greater than about 2.6:1. In some embodiments, the geared architecture 62 defines a gear reduction ratio of less than or equal to about 4.5, more narrowly less than or equal to about 4, or less than or equal to about 3.5. It should be understood, however, that the above parameters are only exemplary of one embodiment of a geared architecture engine and that the present invention is applicable to other gas turbine engines including direct drive turbofans.

A significant amount of thrust is provided by a bypass flow through the bypass passage 58 due to the high bypass ratio. In examples, the gas turbine engine 20 is rated to produce 10,000 pounds of thrust (44482N) or more, such as between about 15,000 to about 50,000 pounds of thrust (66723N to 222411N), measured at sea level and at a static, full-rated takeoff power. In some examples, the engine 20 can be rated to produce between about 20,000 to about 40,000 pounds of thrust (88964N to 177929N), such as between about 21,000 to about 25,000 pounds of thrust (93413N to 111206N) at a static, full-rated takeoff power. In other examples, the engine 20 can be rated to produce between about 25,000 to about 35,000 pounds of thrust (111206N to 155688N), at a static, full-rated takeoff power. The fan section 14 of the engine 10 is designed for a particular flight condition -- typically cruise at about 0.8 Mach and about 35,000 feet (10668m). The flight condition of 0.8 Mach and 35,000 ft (10668m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [((Tambient deg R) / 518.7)^0.5] (where deg R = K x 9/5). The "Low corrected fan tip speed" as disclosed herein according to one non-limiting embodiment is less than about 1150 ft / second (350.5 m/s).

The fan section 14 includes a plurality of fan blades 15 (two shown) rotatable about the axis X. In embodiments, the plurality of fan blades may be fewer than 18, or more narrowly 16 or fewer. In some examples, the fan section 14 is a fixed pitch fan in which each of the fan blades 15 have a fixed pitch or stagger angle relative to the axis X such that the fan blades 15 do not rotate about a respective fan blade axis E extending in a generally radial direction. The fan blade axis E can be generally perpendicular or otherwise transverse to the axis X. The above parameters for the engine 20 are intended to be exemplary.

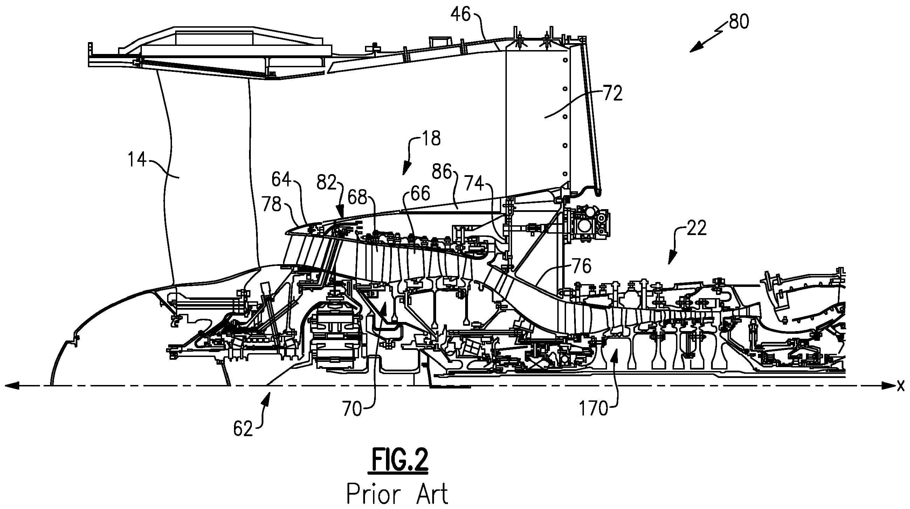

As shown in Figure 2, the example engine casing 50 generally includes at least an inlet case portion 64, a low pressure compressor case portion 66, and an intermediate case portion 76. The inlet case 64 guides air to the low pressure compressor case 66. The low pressure compressor case 66 in an example prior art gas turbine engine 80 supports a plurality of compressor stator vanes 68. Notably, the low pressure compressor section 18, and the high pressure compressor section 22, and the arrangement of the low rotor 70 and high rotor 170, respectively, are not part of the prior art. The low rotor 70 rotates about the central axis X, and, with the compressor stator vanes 68, help compress air moving through the low pressure compressor case 66. Downstream of the low pressure compressor the air passes into the high pressure compressor section 22, and is further compressed by its rotor 170. The mounting of the compressor as shown in Figure 2 is prior art, however, the structure of the low pressure compressor section 18 and high pressure compressor section 22, and the rotors 70 and 170 were not part of the prior art.

A plurality of guide vanes 72 secure the intermediate case 76 to the fan casing 46. Formerly, the guide vanes 72 each included at least a rear attachment 74 and a forward attachment 78. The rear attachment 74 connects to an intermediate case 76 while the forward attachment 78 connects to the inlet case 64. The lower pressure compressor case 66 was thus supported through the intermediate case 76 and the inlet case 64.

In the prior art, a plumbing connection area 82 is positioned between the rear attachment 74 and the forward attachment 78. The plumbing connection area 82 includes connections used for maintenance and repair of the gas turbine engine 80, such as compressed air attachments, oil attachments, etc. The forward attachment 78 extends to the inlet case 64 from at least one of the guide vanes 72 and covers portions of the plumbing connection area 82. A fan stream splitter 86, a type of cover, typically attaches to the forward attachment 78 to shield the plumbing connection area 82.

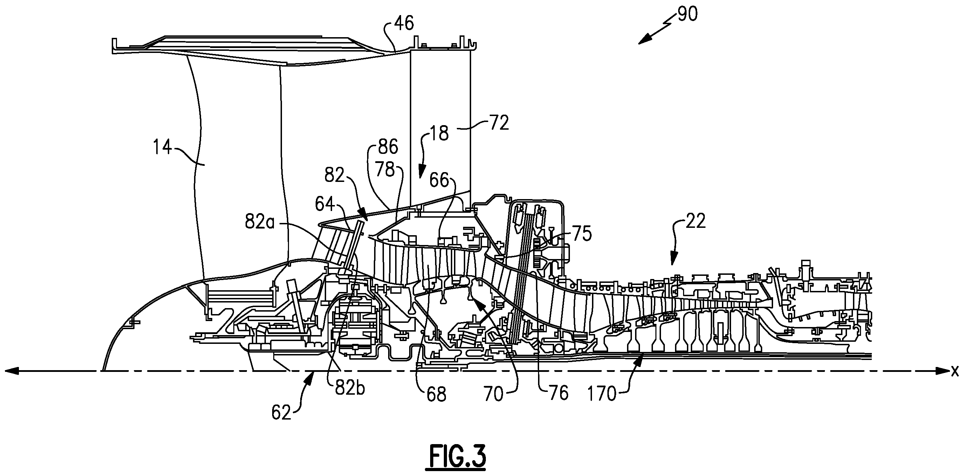

Referring now to an example of the present invention shown in Figure 3, in the turbine engine 90, the forward attachment 78 attaches to a front portion of the low pressure compressor case 66. In this example, the forward attachment 78 extends from the guide vane 72 to support the low pressure compressor case 66. Together, the forward attachment 78 and guide vane 72 act as a support member for the low pressure compressor case 66. The plumbing connection area 82 (which includes connections used for maintenance and repair of the gas turbine engine 90, such as compressed air attachments, oil attachments, etc) is positioned upstream of the forward attachment 78 facilitating access to the plumbing connection area 82. In contrast, the plumbing connection area of prior art embodiments was typically positioned between the rear attachment and the forward attachment and the forward attachment typically extended to the inlet case from at least one of the guide vanes, thereby covering portions of the plumbing connection area, which complicated access thereto; this complicated structure was further complicated by a fan stream splitter, a type of cover, that typically was attached to the forward attachment to shield the plumbing connection area.

In the embodiment shown in Figure 3, an operator may directly access the plumbing connection area 82 after removing the fan stream splitter 86. The plumbing connection area 82 typically provides access to a lubrication system 82a, a compressed air system 82b, or both. The lubrication system 82a and compressed air system 82b are typically in fluid communication with the geartrain 62.

Maintenance and repair of the geartrain 62 may require removing the geartrain 62 from the engine 90. Positioning the plumbing connection area 82 ahead of the forward attachment 78 simplifies maintenance and removal of the geartrain 62 from other portions of the engine 90. Draining oil from the geartrain 62 prior to removal may take place through the plumbing connection area 82 for example. The plumbing connection area 82 is typically removed with the geartrain 62. Thus, the arrangement may permit removing the geartrain 62 on wing or removing the inlet case 64 from the gas turbine engine 90 separately from the low pressure compressor case 66. This reduces the amount of time needed to prepare an engine for continued revenue service, saving an operator both time and money.

Connecting the forward attachment 78 to the low pressure compressor case 66 helps maintain the position of the rotor 70 relative to the interior of the low pressure compressor case 66 during fan rotation, even if the fan section 14 moves. In this example, the intermediate case 76 supports a rear portion of the low pressure compressor case 66 near a compressed air bleed valve 75.

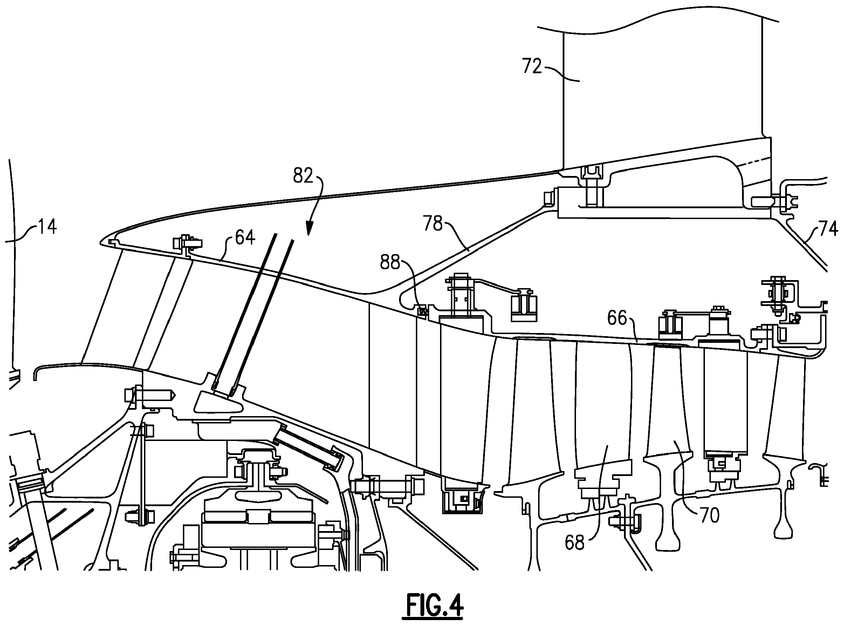

As shown in Figure 4, a seal 88, such as a "W" seal, may restrict fluid movement between the inlet case 64 and the low pressure compressor case 66. In this example, the seal 88 forms the general boundary between the inlet case 64 and the low pressure compressor case 66, while still allowing some amount of movement between the cases.

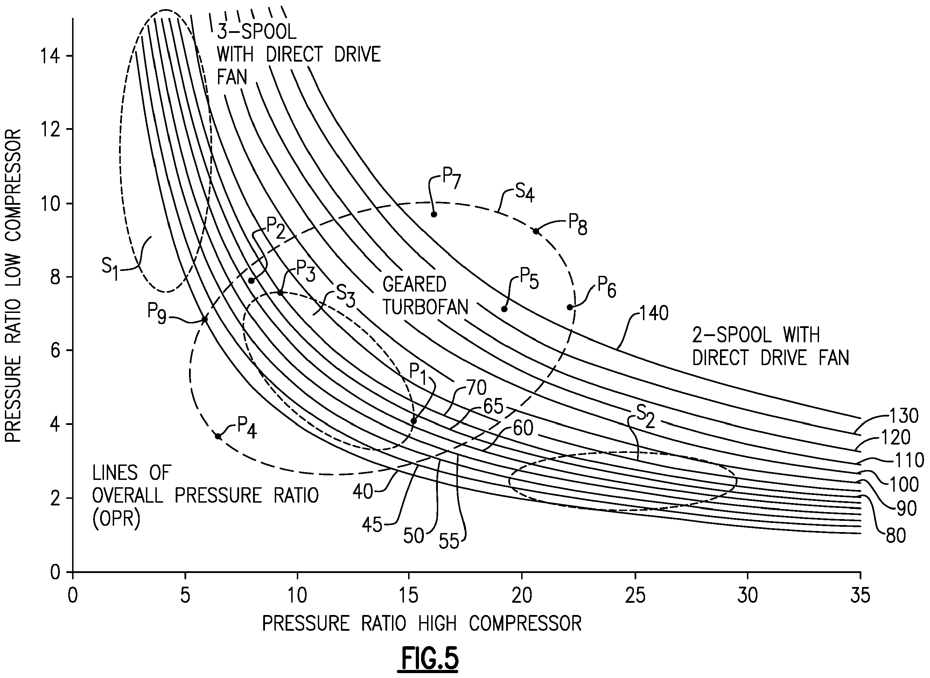

Figure 5 shows a novel worksplit that has been invented to improve the fuel burn efficiency of a geared turbofan architecture with a fan 14 connected to the low compressor 18 through a speed reduction device such as a gearbox 62. Since a gear reduction 62 is incorporated between the fan 14 and the low pressure compressor 18, the speeds of the low pressure compressor can be increased relative to a traditional two spool direct drive arrangement. This provides freedom in splitting the amount of compression between the low pressure section 18 and the high pressure section 22 that can be uniquely exploited to improve fuel burn efficiency on the geared turbofan architecture described in Figures 1 and 2. This resulting worksplit is distinctly different from historical two and three spool direct drive architectures as shown in Figure 5.

Notably, while the gear train 62 is shown axially adjacent to the fan 14, it could be located far downstream, and even aft of the low turbine section 34. As is known, the gear illustrated at 62 in Figures 2 and 3 could result in the fan 14 rotating in the same, or the opposite direction of the compressor rotors 70 and 170.

It is known in prior art that an overall pressure ratio (when measured at sea level and at a static, full-rated takeoff power) of at least 35:1 is desirable, and that an overall pressure ratio of greater than about 40:1 and even about 50:1 is more desirable. That is, after accounting for the fan 14 pressure rise in front of the low pressure compressor 18, the pressure of the air entering the low compressor section 18 should be compressed as much or over 35 times by the time it reaches the outlet of the high compressor section 22. This pressure rise through the low and high compressors will be referred to as the gas generator pressure ratio.

Figure 5 shows the way that this high pressure ratio has been achieved in the two prior art engine types versus the Applicant's engine's configuration.

Area S₁ shows the typical operation of three spool arrangements discussed the Background Section. The pressure ratio of the low compressor (i.e., the pressure at the exit of the low pressure compressor divided by the pressure at the inlet of the low pressure compressor) is above 8, and up to potentially 15. That is, if a pressure of 1 were to enter the low pressure compressor, it would be compressed between 8 to 15 times.

As can be further seen, the high pressure compressor ratio (i.e., the pressure at the exit of the high pressure compressor divided by the pressure at the inlet of the high pressure compressor) in this arrangement need only compress a very low pressure ratio, and as low as 5 to achieve a combined gas generator pressure ratio of above 35. For example, if the low pressure compressor ratio is 10 and the high pressure compressor ratio is 3.5, the combined overall pressure ratio ("OPR") would be (10)(3.5) = 35. In addition, the three spool design requires complex arrangements to support the three concentric spools.

Another prior art arrangement is shown at area S₂. Area S₂ depicts the typical pressure ratio split in a typical two spool design with a direct drive fan. As can be seen, due to the connection of the fan directly to the low pressure compressor, there is little freedom in the speed of the low pressure compressor. Thus, the low pressure compressor can only do a small amount of the overall compression. As shown, it is typically below 4 times. On the other hand, the high pressure compressor must provide an amount of compression typically more than 20 times to reach an OPR of 40 (or 50).

The S₂ area results in undesirably high stress on the high pressure compressor, which, in turn, yields challenges in the mounting of the high pressure spool. In other words, the direct drive system that defines the S₂ area presents an undesirable amount of stress, and an undesirable amount of engineering required to properly mount the high pressure spool to provide such high pressure ratios.

Applicant's current low compressor/high compressor pressure split is shown at area S₃. The fan is driven at a speed distinct from the low pressure compressor, and a higher compression ratio can be achieved at the low pressure compressor section than was the case at area S₂. Thus, as shown, the pressure ratio across the low pressure compressor may be between 4 and 8. This allows the amount of compression to be performed by the high pressure compressor to only need to be between 8 times and 15 times.

The area S₃ is an enabling design feature that allows the geared turbofan architecture shown in Figures 1 and 2 to achieve a very high gas generator OPR while avoiding the complexities of historical three spool and two spool direct drive architectures. The area S₃ is an improvement over both areas S₁ and S₂. As an example, a 3-4% fuel efficiency is achieved at area S₃ compared to area S₁. A fuel savings of 4-5% is achieved at area S₃, compared to area S₂.

In fact, in comparison to a gas turbine engine provided with a gear drive, but operating in the pressure ratios of area S₂, there is still a 2% fuel burn savings at the S₃ area.

As such, the area S₃ reduces fuel burn, and provides engineering simplicity by more favorably distributing work between the hotter high pressure spools and colder low pressure spools.

Stated another way, the present invention provides a combination of a low pressure compressor and a high pressure compressor which together provides an OPR of greater than about 35 and, in some embodiments greater than about 40, in some embodiments greater than about 50, and in some embodiments up to about 70, or less than or equal to about 80. This high OPR is accomplished by a beneficial combination of a pressure ratio across the low pressure compressor of between about 4 and about 8 coupled with an additional pressure ratio across the high pressure ratio compressor of between about 8 and about 15.

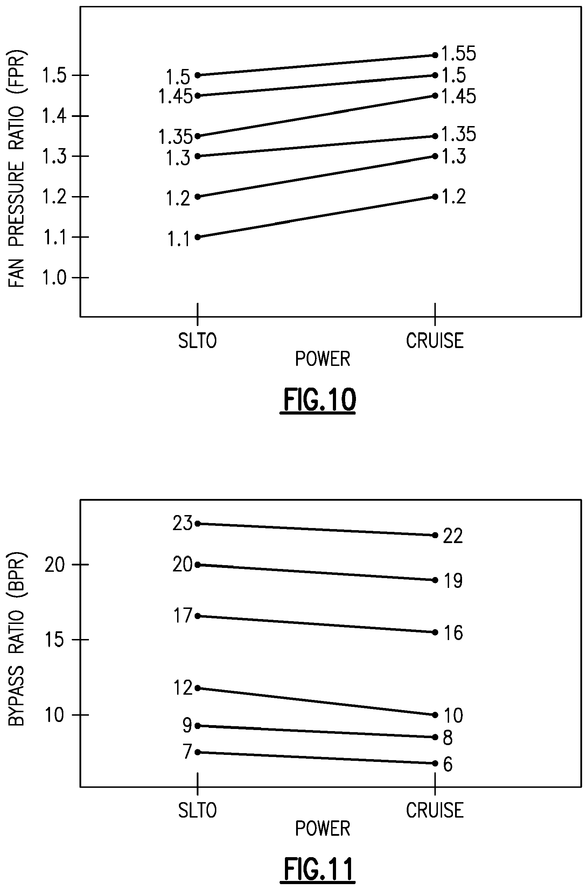

Improved fuel consumption can be further achieved wherein the fan may be low pressure, and have a pressure ratio less than or equal to about 1.50, more specifically less than or equal to about 1.45, and even more specifically less than or equal to about 1.35, less than or equal to about 1.3, and/or greater than or equal to about 1.1 or about 1.2, when the engine is at measured at sea level and at a static, full-rated takeoff power. A bypass ratio, defined as the volume of air passing into bypass passage 58 compared to the volume of air in the core air flow is greater than or equal to about 8 at cruise power. In some embodiments, the bypass ratio is less than or equal to about 22 at cruise power, the low pressure compressor 18 is a four stage compressor, and the high pressure compressor 22 is a ten or eleven stage compressor. The low pressure compressor may have a pressure ratio less than or equal to 8, more narrowly between 3 to 8, and even more narrowly 4 to 6, measured at sea level and at a static, full-rated takeoff power, and be powered by a 4 or 5-stage low pressure turbine. In embodiments, the low pressure compressor 18 has a pressure ratio less than or equal to about 5, or even more narrowly less than or equal to about 4, measured at sea level and at a static, full-rated takeoff power. In some embodiments, the first or low pressure compressor 18 may have a pressure ratio greater than or equal to 7 measured at sea level and at a static, full-rated takeoff power. The second or high compressor rotor may have a nominal pressure ratio greater than or equal to 7, more narrowly between 7 to 15, and even more narrowly 8 to 10, measured at sea level and at a static, full-rated takeoff power, and may be powered by a 2-stage high pressure turbine. In embodiments, the high pressure compressor 22 has a pressure ratio greater than or equal to about 10, and/or less than or equal to about 35, measured at sea level and at a static, full-rated takeoff power. In examples, the bypass ratio is greater than or equal to about 7, more narrowly greater than or equal to about 9 or about 12, measured at sea level and at a static, full-rated takeoff power. In other examples, the bypass ratio is less than or equal to about 23, or more narrowly less than or equal to about 20, measured at sea level and at a static, full-rated takeoff power. In some examples, the bypass ratio is greater than or equal to about 6, more narrowly greater than or equal to about 8 or about 10, measured at cruise power. In other examples, the bypass ratio is less than or equal to about 22, or more narrowly less than or equal to about 19, measured at cruise power. A gas turbine engine operating with these operational parameters provides benefits compared to the prior art. Example fan pressure ratios (FPR) and bypass ratios (BPR) at various operating conditions of the engine 20, including sea level and at a static, full-rated takeoff power (SLTO) and cruise power are shown in Figures 10 and 11.

Applicant's low compressor/high compressor pressure split is shown at area S₄ according to another embodiment. In the embodiment of area S₄, the high pressure compressor 22 has a pressure ratio less than or equal to about 19 or 22, or more narrowly greater than or equal to about 7, and the low pressure compressor 18 has a pressure ratio less than or equal to about 9, or more narrowly less than or equal to about 7, such as between about 4 and about 6.5. The low pressure compressor 18 and the high pressure compressor 22 of area S₄ together provide an OPR of between about 35 and about 180, more narrowly less than or equal to about 150, or between about 80 and about 140. In some embodiments, the OPR is less than or equal to about 90 or 100.

In some embodiments, the low pressure compressor 18 and the high pressure compressor 22 establish a pressure split ratio that is between about 0.25 and about 1.0, or more narrowly greater than about 0.50 or greater than about 0.80. For example, in the embodiment of point P₁, the high pressure compressor 22 has a pressure ratio of about 15 and the low pressure compressor 18 has a pressure ratio of about 4 to yield a pressure split ratio of about 0.25. In the embodiment of point P₂, each of the high pressure compressor 22 and the low pressure compressor 18 has a pressure ratio of about 8 to yield a pressure split ratio of 1. In embodiments, the pressure split ratio is between about 0.35 and about 0.85. For example, in the embodiment of point P₃, the high pressure compressor 22 has a pressure ratio of about 9 and the low pressure compressor 18 has a pressure ratio of about 7.5 to yield a pressure split ratio of about 0.85. In the embodiment of point P₄, the high pressure compressor 22 has a pressure ratio of about 7 and the low pressure compressor 18 has a pressure ratio of about 4 to yield a pressure split ratio of about 0.57. In the embodiment of point P₅, the high pressure compressor 22 has a pressure ratio of about 19 and the low pressure compressor 18 has a pressure ratio of about 6.5 or about 7 to yield a pressure split ratio of about 0.35 or 0.38.

In the embodiment of point P₆, the high pressure compressor 22 has a pressure ratio of about 22 and the low pressure compressor 18 has a pressure ratio of about 7 to yield a pressure split ratio of about 0.32 and an OPR of about 155. In the embodiment of point P7, the high pressure compressor 22 has a pressure ratio of about 16 and the low pressure compressor 18 has a pressure ratio of about 10 to yield a pressure split ratio of about 0.63 and an OPR of about 160. In the embodiment of point P₈, the high pressure compressor 22 has a pressure ratio of about 20 and the low pressure compressor 18 has a pressure ratio of about 9 to yield a pressure split ratio of about 0.45 and an OPR of about 180. In some embodiments, the high pressure compressor 22 corresponding to points P₁ to P4 has eight to eleven compressor stages, and the low pressure turbine 34 has four or five stages. In embodiments, and the high pressure compressor 22 corresponding to points P5 to P₈ has eight to twelve compressor stages, and the low pressure turbine 34 has four to six stages.

In some embodiments, the low pressure compressor 18 performs relatively more work than the high pressure compressor 22 to yield a pressure split ratio of greater than about 1.0, or more narrowly less than or equal to about 1.2 or 1.4. For example, in the embodiment of point P₉, the high pressure compressor 22 has a pressure ratio of about 6 and the low pressure compressor 18 has a pressure ratio of about 7 to yield a pressure split ratio of about 1.15 and an OPR of about 42. In some embodiments, the low pressure compressor 22 has the same or a greater number of compressor stages and/or the same or a greater loading per stage than the high pressure compressor 22.

In some embodiments, the high pressure compressor 22 has a pressure ratio that is less than or equal to about 35. The low pressure compressor 18 and the high pressure compressor 22 arranged according to any of the pressure split ratios disclosed herein.

Similar to the area of S₃, the area S₄ and work split ratios disclosed herein enable relatively more work to be shifted from the high pressure compressor 22 to the low pressure compressor 18 to achieve a relatively OPR while avoiding the complexities of historical three spool and two spool direct drive architectures. Shifting relatively more work from the high pressure compressor 22 to the low pressure compressor 18 can improve efficiency due to the relatively cooler airflow delivered in the core flow path C to the low pressure compressor 18, and allows the high pressure compressor 22 to rotate relatively slower. Loading per each compressor stage of the high pressure compressor 22 and/or the low pressure compressor 18 can be increased to achieve the pressure ratios disclosed herein, including increasing the rotational speeds during operation. The total number of stages of the high pressure compressor 22 and/or the low pressure compressor 18 can also be increased to achieve the disclosed pressure ratios. One or more stages of the high and/or low pressure compressors 22, 18 can also be provided with cooling airflow to operate at relatively greater temperatures and pressures. The number of stages of the high and/or low pressure turbines 30, 34 can be increased to cause the respective high and low pressure compressors 22, 18 to achieve relatively high pressure ratios. The turbine blades in the high and/or low pressure turbine 30, 34 can also be made of single crystal or directionally solidified materials to achieve relatively higher operating temperatures. The high and/or pressure compressors 22, 18 can also be arranged with one or more rows of variable vanes to modulate the respective pressure ratios during engine operation.

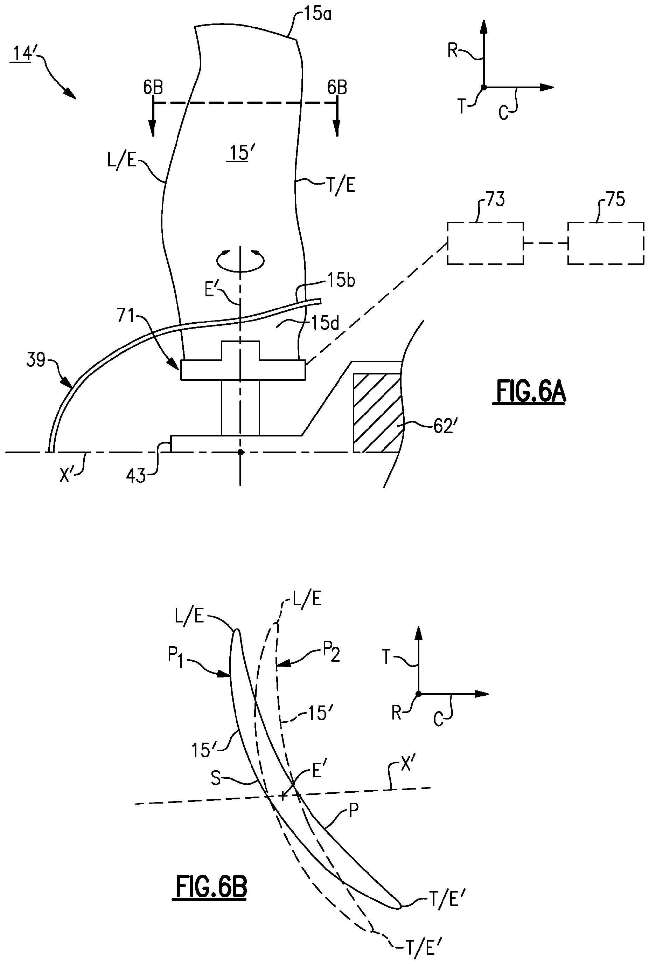

Referring to Figures 6A and 6B, in some embodiments fan section 14' is a variable pitch fan to modulate bypass airflow to bypass passage 58 and core airflow to compressor section 19 (see Figure 1). Figure 6A illustrates a partial cross-sectional view of fan section 14' including a pitch change mechanism 71 for varying a pitch of one or more fan blades 15'. Each of the fan blades 15' (one shown for illustrative purposes) is rotatably attached to a fan rotor 43 via the pitch change mechanism 71, with fan rotor 43 driven by geared architecture 62'. The fan blade 15' includes an airfoil body extending between leading edge L/E and trailing edge T/E, in a thickness direction T between pressure and suction sides P, S, and along fan blade axis E' in a spanwise or radial direction R between tip 15a and platform 15b adjacent to conical hub 39, with the radial direction R being perpendicular to chordwise direction C and the thickness direction T. A root 15d of the fan blade 15' extends inward from platform 15b. The fan blade axis E' can be perpendicular, or otherwise transverse to, the central axis X'.

The pitch change mechanism 71 selectively causes one or more of the fan blades 15' to rotate about a corresponding fan blade axis E' between a first position P1 and a second position P2 (depicted in dashed lines in Figure 6B). The pitch change mechanism 71 includes an actuator 73 coupled to a control device 75 to cause the fan blade 15' to rotate to a desired pitch or angle of incidence. Example actuators and control devices can include a hydraulic pump coupled to a hydraulic source, an electrical motor coupled to a dedicated controller or engine controller, or another suitable device. By changing the pitch of one or more of the fan blades 15', the fan bypass airflow is modulated, and performance of the gas turbine engine 10 can be adjusted during various operating conditions including takeoff, climb, cruise, descent, and/or landing.

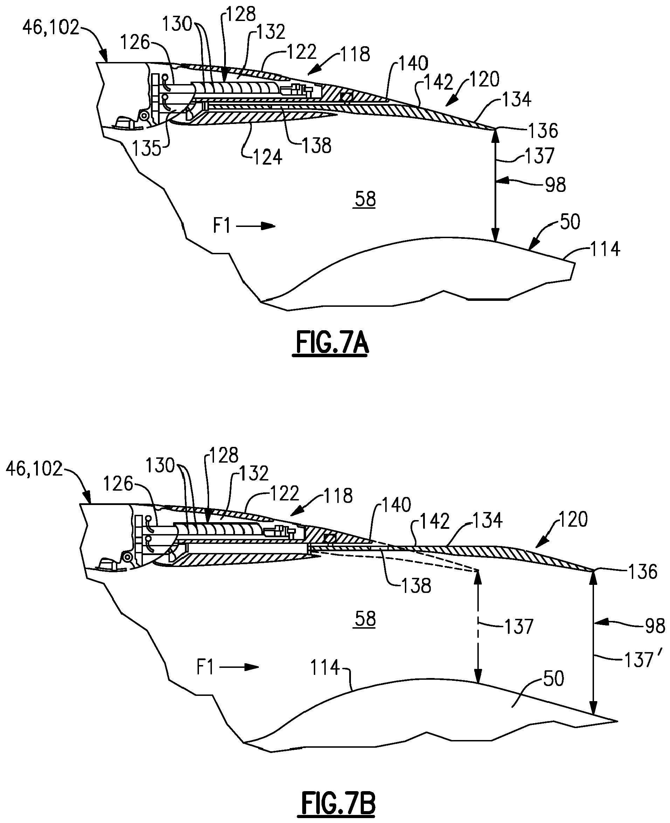

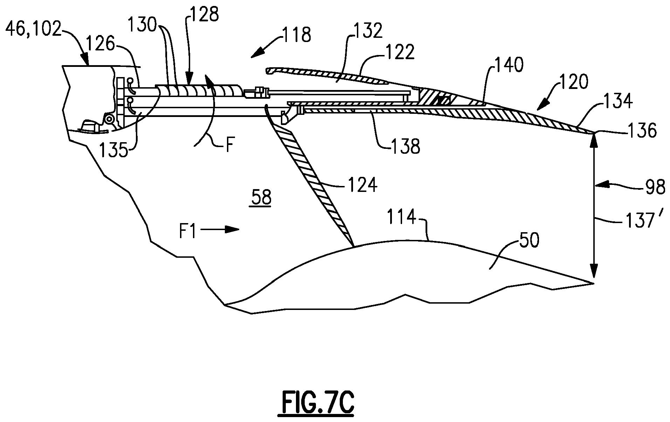

Referring to Figures 7A-7C, the nacelle 46 in some embodiments includes at least one thrust reverser 118 and/or a variable area fan nozzle (VAFN) 120 for adjusting various characteristics of the bypass flow. Figure 7A illustrates the thrust reverser 118 and the variable area fan nozzle 120 in stowed positions. Figure 7B illustrates the thrust reverser 118 in the stowed position and the variable area fan nozzle 120 in a deployed position. Figure 7C illustrates the thrust reverser 118 in a deployed position and the variable area fan nozzle 120 in stowed position. The thrust reverser 118 includes a thrust reverser body 122, which is configured with aft nacelle 102. In some embodiments, the thrust reverser 118 includes one or more blocker doors 124, one or more actuators 126, and/or one or more cascades 128 of turning vanes 130 arranged circumferentially around axis X (Figure 1).

The thrust reverser body 122 may have a generally tubular geometry. The thrust reverser body 122 includes at least one recess 132 that houses the cascades 128 and the actuators 126 when the thrust reverser 118 is in the stowed position. Each blocker door 124 is pivotally connected to the thrust reverser body 122. The actuators 126 are adapted to axially translate the thrust reverser body 122 between the stowed and deployed positions. As the thrust reverser body 122 translates aftwards, the blocker doors 124 pivot radially inward into the bypass passage 58 and divert at least some or substantially all of the bypass airflow F1 as flow F through the cascades 128 to provide the reverse engine thrust.

In other embodiments, the cascades 128 are configured to translate axially with a respective thrust reverser body 122. The thrust reverser body 122 and/or cascades 128 can include one or more circumferential segments that synchronously or independently translate or otherwise move between deployed and stowed positions.

The variable area fan nozzle 120 includes a nozzle body 134 and one or more actuators 135. The nozzle body 134 is configured with the aft nacelle 102, and is arranged radially within and may nest with the thrust reverser body 122. The nozzle body 134 may have a generally tubular geometry. The actuators 135 are configured to axially translate the nozzle body 134 between the stowed position of Figure 7A and the deployed position of Figure 7B. As the nozzle body 134 translates aftwards, a radial distance 137 of the bypass nozzle 98 between a trailing edge or aft end 136 of the nacelle 46 and the engine casing (or core cowling) 50 may change (e.g., increase) and thereby change (e.g., increase) a flow area of the bypass nozzle 98. In this manner, the variable area fan nozzle 120 may adjust a pressure drop or ratio across the bypass flowpath defined by the bypass passage 58 by changing the flow area of the bypass nozzle 98.

The variable area fan nozzle 120 can define or otherwise include at least one auxiliary port 138 to affect the bypass flow. In some examples, the auxiliary port 138 is defined between an upstream portion 140 of the aft nacelle 102 and the nozzle body 134 of the variable area fan nozzle 120 as the nozzle body 134 translates axially aftwards. A flow area through the auxiliary port 138 augments the flow area of the bypass nozzle 98, thereby increasing an effective flow area of the variable area fan nozzle 120. The variable area fan nozzle 120 therefore may adjust a pressure drop or ratio across the bypass flowpath defined by the bypass passage 58 while translating the nozzle body 134 over a relatively smaller axial distance.

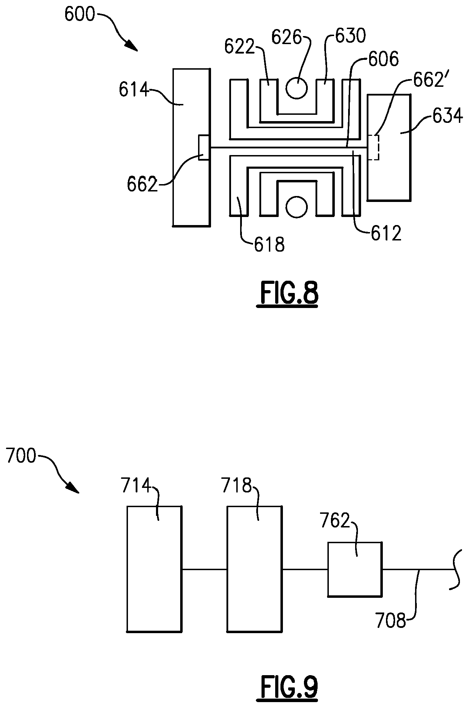

Figure 8 shows an embodiment 600, wherein there is a fan drive turbine 634 driving a shaft 606 to in turn drive a fan rotor 614. A gear reduction 662 may be positioned between the fan drive turbine 634 and the fan rotor 614, or alternatively between an aft portion of the shaft 606 and the fan drive turbine 634 at location 662' (shown in dashed lines) aft of a second stage compressor rotor 622 or a combustor section 626. The gear reduction 662, 662' may be structured and operate like the gear reduction disclosed above. A compressor rotor 618 is driven by an intermediate pressure turbine 612, and the second stage compressor rotor 622 is driven by a turbine rotor 630. The combustor section 626 is positioned intermediate the compressor rotor 622 and the turbine rotor 630.

Figure 9 shows yet another embodiment 700 wherein a fan rotor 714 and a first stage compressor 718 rotate at a common speed. The gear reduction 762 (which may be structured as disclosed above) is intermediate the compressor rotor 718 and a shaft 708 which is driven by a low pressure turbine section.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (10) comprising:
a fan (14; 714);
a low fan pressure ratio of less than or equal to 1.45 measured across the fan alone, and measured at sea level and at a static, full-rated takeoff power;
a two spool core engine including a low spool having a low pressure compressor (18; 718) and a high spool having a high pressure compressor (22), a bypass passage (58), and a bypass ratio, defined as the volume of air passing into the bypass passage (58) compared to the volume of air passing into the core engine, of greater than 10 measured at cruise power;
a turbine section (21) including a low pressure turbine (34) with an inlet, an outlet, and a low pressure turbine pressure ratio greater than 5, measured at sea level and at a static, full-rated takeoff power, wherein the low pressure turbine pressure ratio is a ratio of a pressure measured prior to the inlet as related to a pressure at the outlet prior to any exhaust nozzle, and the low spool includes a low shaft (708) driven by the low pressure turbine (34); and
a gear arrangement (62; 762) that drives the fan (14; 714), the gear arrangement defining a gear reduction ratio of greater than 2.3, the gear arrangement (62; 762) driven by the low pressure turbine (34) through the low shaft (708), wherein the gear arrangement (62; 762) is intermediate the low pressure compressor (18; 718) and the low shaft (708), an overall pressure ratio, provided by the combination of a pressure ratio across the low pressure compressor (18; 718) and a pressure ratio across the high pressure compressor (22), is greater than 50, measured at sea level and at a static, full-rated takeoff power, the pressure ratio across the high pressure compressor (22) is greater than 7, measured at sea level and at a static, full-rated takeoff power, and the pressure ratio across the low pressure compressor (18; 718) is less than 6, measured at sea level and at a static, full-rated takeoff power.

2. The gas turbine engine of claim 1, wherein the turbine section (21) further includes a two stage high pressure turbine (30).

3. The gas turbine engine of claim 1 or 2, wherein the low fan pressure ratio is less than 1.35, measured across the fan (14; 714) alone, at sea level and at a static, full-rated takeoff power.

4. The gas turbine engine of claim 1, 2 or 3, wherein the pressure ratio across the low pressure compressor (14; 714) is less than or equal to 5, measured at sea level and at a static, full-rated takeoff power, and the pressure ratio across the high pressure compressor (22) is greater than 10, measured at sea level and at a static, full-rated takeoff power.

5. The gas turbine engine of any preceding claim, wherein the low pressure compressor (14; 719) is a three stage compressor, the low pressure turbine (34) is a three or four stage turbine, and the overall pressure ratio is less than 80, measured at sea level and at a static, full-rated takeoff power.

6. The gas turbine engine of any of claims 1 to 4, wherein the low pressure compressor (18; 718) is a four stage compressor, the overall pressure ratio is less than 80, measured at sea level and at a static, full-rated takeoff power, and the gear reduction ratio is less than 4.

7. The gas turbine engine of any preceding claim, comprising a thrust reverser (118) that selectively communicates air from the bypass passage (58), and wherein the fan (14; 714) is a fixed pitch fan and has a low corrected fan tip speed of less than 1150 feet / second (350.5 m/s).

8. The gas turbine engine of any preceding claim, wherein the pressure ratio across the low pressure compressor (14; 714) is less than or equal to 4, measured at sea level and at a static, full-rated takeoff power.

9. The gas turbine engine of any preceding claim, wherein the high pressure compressor (22) is a nine to eleven stage compressor, and the gear reduction ratio is less than or equal to 4.5.

10. The gas turbine engine of any preceding claim, further comprising a compressed air system (82b) and a lubrication system (82a) in communication with the gear arrangement (62; 762).

11. The gas turbine engine of claim 10, further comprising a plumbing connection area (82) that provides access to at least one of compressed air from the compressed air system (82b), or oil from the lubrication system (82a).

12. The gas turbine engine of claim 11, wherein the plumbing connection area (82) provides access to both compressed air from the compressed air system (82b) and oil from the lubrication system (82a), and the plumbing connection area (82) is removable with the gear arrangement (62; 762).

13. The gas turbine engine of any preceding claim, wherein the fan (14; 714) has a low corrected fan tip speed of less than 1150 feet / second (350.5 m/s), and the low pressure turbine (34) is a four stage turbine.

14. The gas turbine engine of any preceding claim, wherein:
the pressure ratio across the low pressure compressor (18; 718) is equal to or greater than 4, measured at sea level and at a static, full-rated takeoff power;
the low fan pressure ratio is less than or equal to 1.3, measured across the fan (14; 714) alone, and measured at sea level and at a static, full-rated takeoff power;
the low pressure turbine (34) is a four stage turbine; and
the engine (10) is rated to produce between 15,000 and 50,000 pounds (66723N and 222411N) of thrust, measured at sea level and at a static, full-rated takeoff power.

15. The gas turbine engine of any preceding claim, wherein the low pressure compressor (18; 718) and the high pressure compressor (22) establish a pressure split ratio that is greater than 0.80.
